# EUROPÄISCHE PATENTSCHRIFT

(11) **EP 0 781 176 B1**
(45) Veröffentlichungstag und Bekanntmachung des Hinweises auf die Patenterteilung: **03.03.1999**
(21) Anmeldenummer: 95931144.0
(22) Anmeldetag: 08.09.1995
(51) Int. Cl.: B21B 39/14, B65G 13/11

(54) **EINRICHTUNG ZUR FÜHRUNG VON ZU TRANSPORTIERENDEM GUT**
DEVICE FOR GUIDING CONVEYED GOODS
DISPOSITIF DE GUIDAGE DE MATIERES TRANSPORTEES

(30) Priorität: 16.09.1994 DE 4434397
(43) Veröffentlichungstag der Anmeldung: 02.07.1997
(73) Patentinhaber: MANNESMANN Aktiengesellschaft, 40213 Düsseldorf (DE)
(72) Erfinder: PIETERS, Rolf, D-45473 Mülheim (DE); KLEMME, Wolfgang, D-47053 Duisburg (DE)
(74) Vertreter: Henze, Lothar
(86) Internationale Anmeldenummer: DE9501274
(87) Internationale Veröffentlichungsnummer: WO9608326

(56) Entgegenhaltungen:
- GB-A- 2 031 771
- US-A- 1 956 636
- US-A- 3 328 993
- PATENT ABSTRACTS OF JAPAN vol. 17 no. 469 (M-1469) ,26.August 1993 & JP,A,05 111728 (DAIDO KIKAI SEISAKUSHO) 7.Mai 1993,
- PATENT ABSTRACTS OF JAPAN vol. 7 no. 189 (M-237) ,18.August 1983 & JP,A,58 090312 (ISHIKAWAJIMA HARIMA JUKOGYO) 30.Mai 1983,

## Beschreibung

Die Erfindung betrifft eine Einrichtung zur Führung von zu transportierendem Gut, gemäß dem Gattungsbegriff des Hauptanspruches.

In Profilwalzwerken beispielsweise für Stabmaterial oder im Rohrwalzwerk muß das langgestreckte, stabförmige Gut zu und von den Umformaggregaten ebenso in den Adjustagelinien zu und von den Schneid- und Bearbeitungsmaschinen sowie Prüfstationen transportiert werden. Dies geschieht in vielen Fällen mittels Rollgängen, die mit meist zylindrisch ausgebildeten Laufrollen versehen sind, die wiederum etwa gleiche Abstände zueinander aufweisen. Die Laufrollen können über Motore einzeln oder mittels durchlaufender Ketten gruppenweise angetrieben sein oder nur als lose Rollen fungieren, wobei dann beispsielsweise die Vortriebskraft für das Gut vom jeweiligen Umformaggregat erzeugt wird.

Die seitliche Begrenzung für den Rollgang übernehmen Seitenbleche, die im Endbereich der Rollen fest installiert sind und sich auf ein Element des die Laufrollen aufnehmenden Rahmens abstützen. Die Höhe der Seitenbleche richtet sich dabei nach dem zu transportierendem Gut mit der in der Vertikalen liegenden längsten Querschnittserstreckung. Bei einer Einzelzuführung für ein Prüfaggregat, beispielsweise Wirbelstromsonde, wird üblicherweise ein aus Blech gefertigter Trichter vor das Prüfaggregat gesetzt, wobei der Austrittsquerschnitt des Trichters höchstens gleich oder kleiner ist als der Eintrittsquerschnitt des Prüfkanales. Damit wird sichergestellt, daß das herangeführte Gut nicht gegen einen Teilbereich der Stirnseite des Prüfaggregates schlagen kann.

Bei Prüfaggregaten, die im Auslaufbereich eines Umformaggregates angeordnet sind, beispielsweise ein Streckreduzierwalzwerk, wird der vorgeschaltete Trichter stark beansprucht, da das Walzgut noch heiß ist z. B. etwa 1000° und eine hohe Transportgeschwindigkeit in der Größenordnung von bis zu 1000 m pro Minute aufweist. Da nicht damit gerechnet Werden kann, daß das auf den Trichter zusteuernde Gut genau mittig liegt, trifft überwiegend die Stirnseite des Gutes auf die Mantelfläche des Trichters und verschleißt sie. Im ungünstigsten Fall kann es sogar vorkommen, daß insbesondere das einen kleinen Querschnitt aufweisende Gut am vorderen Ende leicht umgebogen ist und im Trichter hängen bleibt, so daß die nachschiebende Länge über das Seitenblech hinweg unkontrolliert in die Halle schießt. Dies kann, von dem Materialverlust einmal abgesehen, unter Umständen einen schweren Unfall verursachen.

In der DE-AS 1925 556 ist ein Rollenbahnförderer zum Zufördern von Flaschenkästen oder dergleichen offenbart. Dieser Förderer besteht aus einem Rollgang mit in Abständen angeordneten quer zur Transportrichtung liegenden Laufrollen und mit einem im Randbereich der Laufrollen angeordneten einander gegenüberliegenden Geländer. Dieses Führungsgelander ist über ein Lager, eine Gewindespindel und ein damit verbundenes Handrad quer zur Transportrichtung verschiebbar. Die bekannte Vorrichtung ist nicht geeignet für den Transport von stabfärmigen Gut oder Flachmaterial, da dieses seitlich unter das Geländer rutschen kann. Außerdem kann die mittlere Höhenlage entsprechend dem unterschiedlichen in der Höhe liegenden Querschnitt des Gutes nicht angepaßt werden.

In der US-A-3,328,993 ist eine gattungsbildende Einrichtung zur Führung von zu transportierendem langgestreckten Gut offenbart. Nach einem Walzwerk, auf dem wahlweise Flachprodukte z. B. Blech, Band oder Profile z. B. Doppel-T-Träger gewalzt werden, ist eine Führungseinrichtung angeordnet. Diese besteht aus zwei im Abstand voneinander angeordneten Spurrollen und zwei einander gegenüberliegenden Seitenblechen, die zueinander verstellbar sind. Die Verstellung der Seitenbleche symmetrisch zur Mittelachse der Transportbahn hin erfolgt über ein Verschiebemittel und über Führungen. Zur Anpassung an die Höhe sind die Seitenbleche, das Verschiebemittel, die Führungen sowie die Spurrollen auf einem Tragrahmen befestigt, der über Führungssäulen und Spindelhubelemente heb- und senkbar ist. Diese Führungseinrichtung ist zum Transport von stabförmigem Gut insbesondere mit kreisrundem Querschnitt nicht geeignet und auch nicht ausgelegt, um das Gut auf ein Aggregat hin zu führen.

Aufgabe der Erfindung ist es, eine Einrichtung zur Führung von zu transportierendem langgestrecktem, stabförmigen Gut, insbesondere Hohlprofil beliebigen Querschnittes anzugeben, mit der über einen großen Abmessungsbereich das vereinzelte Gut in etwa mittig auf ein Aggregat zuführbar ist und die Mittelage in bezug auf die Höhe an die unterschiedliche in der Höhe liegende Querschnittserstreckung des zu transportierenden Gutes in einfacher Weise anpaßbar ist.

Diese Aufgabe wird mit den im kennzeichnenden Teil des Anspruches 1 angegebenen Merkmalen gelöst. Vorteilhafte Weiterbildungen sind Bestandteil von Unteransprüchen

Erfindungsgemäß ist ein bestimmter in Transportrichtung sich erstreckender Abschnitt der an sich bekannten Seitenbleche symmetrisch zur Mittelachse der Transportbahn hin verschiebbar angeordnet. Der Anfangsbereich dieses Abschnittes ist trichterförmig ausgebildet. In Abhängigkeit von der in der Horizontale liegenden Querschnittserstreckung des Gutes, unabhängig, ob der Querschnitt ein Kreis, ein Oval oder ein Rechteck ist, werden die beiden in Form von Leitplanken ausgebildeten Seitenbleche in Richtung zur Mittelachse der Transportbahn hin mehr oder weniger weit verschoben. Dabei ist die sich nach dem Verschieben ergebende lichte Weite zwischen den beiden Leitplanken immer größer als die größte in der Horizontale liegende Querschnittserstreckung des zu transportierenden Gutes. Damit wird sichergestellt, daß zwischen der Mantelfläche des Gutes und der Innenwand der Leitplanke genügend Abstand verbleibt, so daß das zu transportierende Gut nicht eingeklemmt wird. Weiterhin soll dadurch die Verschleißrate für die Leitplanke gering gehalten werden. In diesem Zusammenhang wird weiterbildend vorgeschlagen, an den Leitplanken auswechselbar Führungsleisten anzuordnen.

Um ein Herausspringen des Gutes aus dem Transportkanal zu vermeiden, wird vorgeschlagen, an einer Leitplanke ein den Kanal abdeckendes Blech zu befestigen. Die Quererstreckung dieses Bleches ist so gewählt, daß bei der größten vorgesehenen Transportbreite der Kanal nahezu vollständig abgedeckt ist. Da die erfindungsgemäße Vorrichtung insbesondere auch für den Transport von Heißgut geeignet ist, sind im Abdeckblech durch die Wand sich erstreckende Öffnungen angebracht. Durch diese kann die im Kanal erwärmte Luft entweichen. Außerdem kann durch diese Öffnungen der Grad der Verstellung der beiden Leitplanken kontrolliert werden.

Um die Leitplanken verschieben zu können, sind diese mit gekröpften Wangen verbunden, die sich auf Führungsbüchsen abstützen. Diese Führungsbüchsen sind verschiebbar auf einer unter der Transportbahn liegenden Achse angeordnet. Die Achse ist in längs zur Transportbahn sich erstreckenden Stegblechen befestigt. Für die Verschiebung der Leitplanken ist eine zweifach in den Stegblechen gelagerte Welle vorgesehen, deren Gewindeabschnitte mit Gewindebuchsen Zusammenwirken. Der Antrieb kann per Hand oder vorzugsweise über einen Stellmotor erfolgen. Die Verschiebung ist stufenlos, so daß die lichte Weite zwischen den Leitplanken jeder horizontalen Querschnittserstreckung des zu transportierenden Gutes angepaßt werden kann. Damit mit einer Einrichtung ein möglichst großer Abmessungsbereich überbrückt werden kann, ist der den Laufrollen nächstliegende Bereich der Führungsleisten mit einer Schräge versehen, wobei die beiden Schrägen sich zu einem Dach ergänzen, dessen Spitze von der Laufrolle abgewandt ist. Da der im Anfangsbereich der verstellbaren Leitplanken angeordnete Trichter für das Gut mit der größten Querschnittserstreckung ausgelegt sein muß, hat es sich als vorteilhaft erwiesen, einen Teil der Querschnittsfläche der Führungsleisten im Bereich der Schräge in Transportrichtung gesehen abnehmend auszunehmen. Dadurch wird erreicht, daß auch das Gut mit einer kleinen Querschnittserstreckung auf die Mitte zugeführt wird und gleichzeitig die darüberliegende Schräge den Höhenschlag vermindert und als Sicherung gegen ein Herausspringen dient.

Üblicherweise liegt die Mittelachse des Umformaggregates und des nachfolgenden Prüfaggregates fest, so daß die Achse des zu transportierenden Gutes dazu fluchten muß. Aus diesem Grunde wird das Leitplankensystem einschließlich der Transportrollen, des Verschiebemittels und der Führungen auf einen Tragrahmen gesetzt, der über vier Führungssäulen und zwei Spindelhubelementen heb- und senkbar ist. Diese Konstruktion hat den Vorteil, daß in sehr kurzer Zeit bei einem Abmessungswechsel die erforderliche Höhenlage und der lichte Abstand der Leitplanken eingestellt werden können.

Ein weiterer Vorteil der erfindungsgemäßen Einrichtung ist darin zu sehen, daß über einen großen Abmessungsbereich hinweg vereinzeltes Gut betriebssicher auf die Mittelachse beispielsweise eines Prüfaggregates zuführbar ist und ein Herausspringen aus der Transportbahn verhindert sowie der Höhenschlag vermindert wird. Die Einrichtung ist insbesondere für die Führung von Heißgut geeignet, das im Regelfall mit hoher Geschwindigkeit das davor liegende Umformaggregat verläßt und mit dieser Einrichtung störungssicher im Fluß beispielsweise mittels Wirbelstrom geprüft werden kann. Die üblicherweise erst nach dem Erkalten mögliche visuelle Oberflächenprüfung kann damit entfallen. Die Einrichtung ist jederzeit nachträglich in einen bestehenden Rollgang einbaubar, da der zusätzlich seitliche Platzbedarf nur gering ist.

In der Zeichnung wird anhand eines Ausführungsbeispieles die erfindungsgemäße Vorrichtung näher erläutert.

Es zeigen:
- Figur 1: einen Längsschnitt der erfindungsgemäßen Einrichtung
- Figur 2: eine Draufsicht der erfindungsgemäßen Einrichtung
- Figur 3: im vergrößerten Maßstab einen Schnitt C-D in Fig. 1
- Figur 4: eine Ansicht X in Fig. 3
- Figur 5: im vergrößerten Maßstab einen Schnitt E-F in Fig. 1
- Figur 6: eine Ansicht X in Fig. 5
- Figur 7: eine Draufsicht des Leitplankensystems
- Figur 8: einen Schnitt C-D in Fig. 7
- Figur 9: im stark vergrößerten Maßstab einen Schnitt A-B in Fig. 8

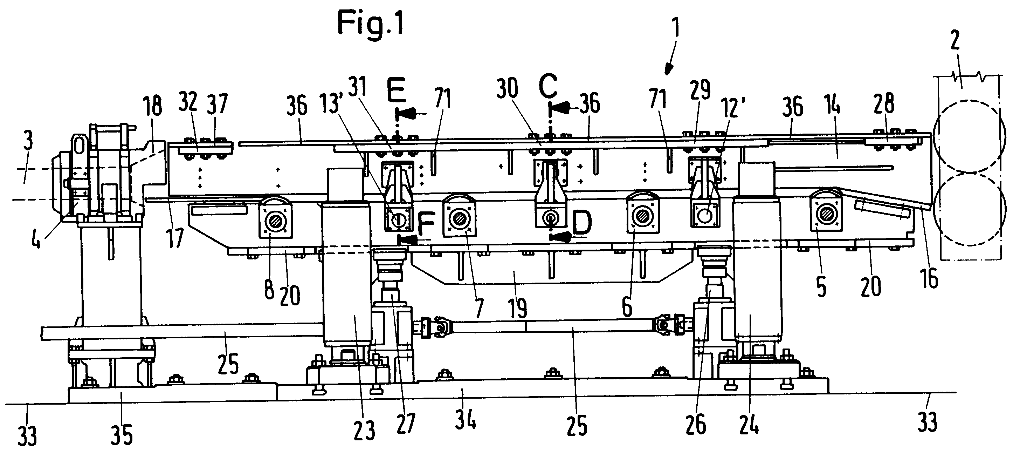

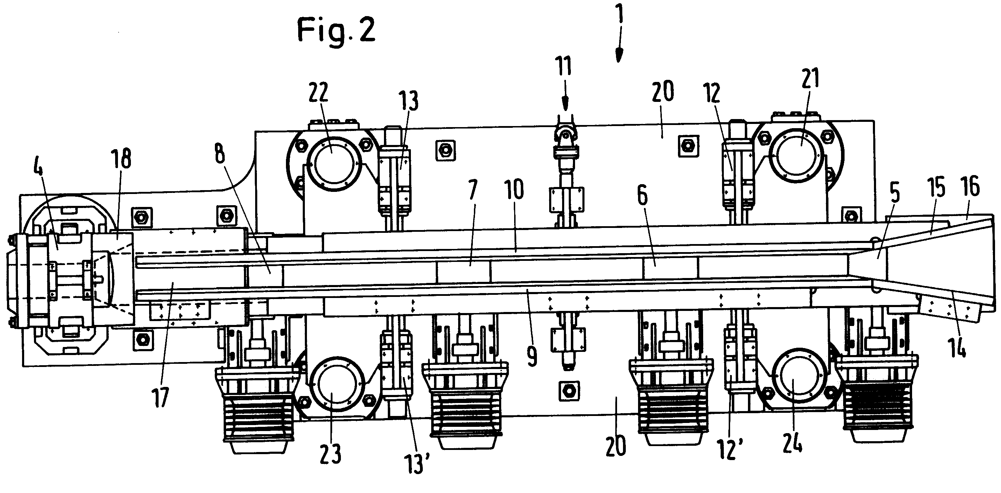

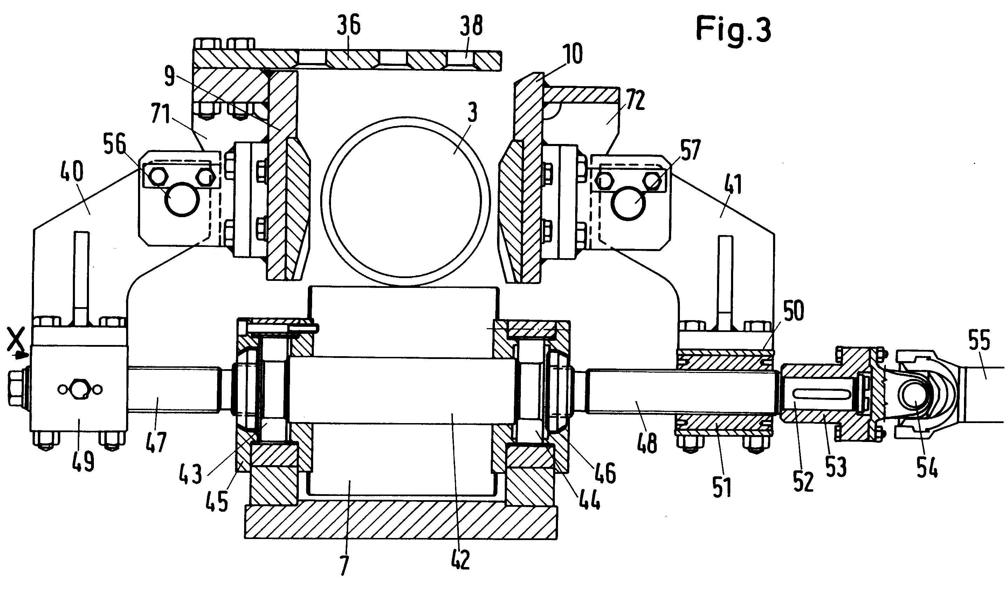

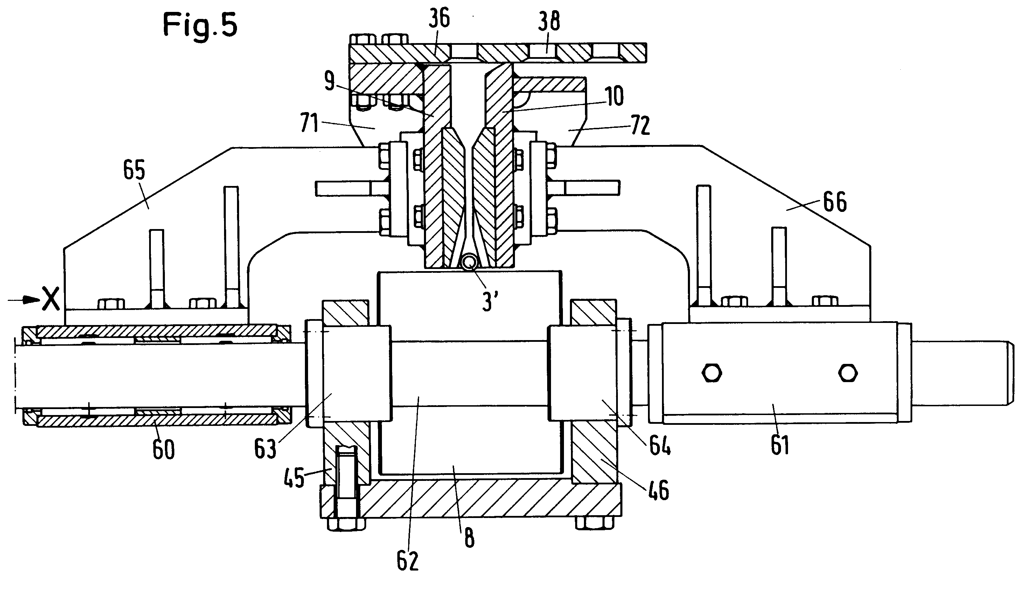

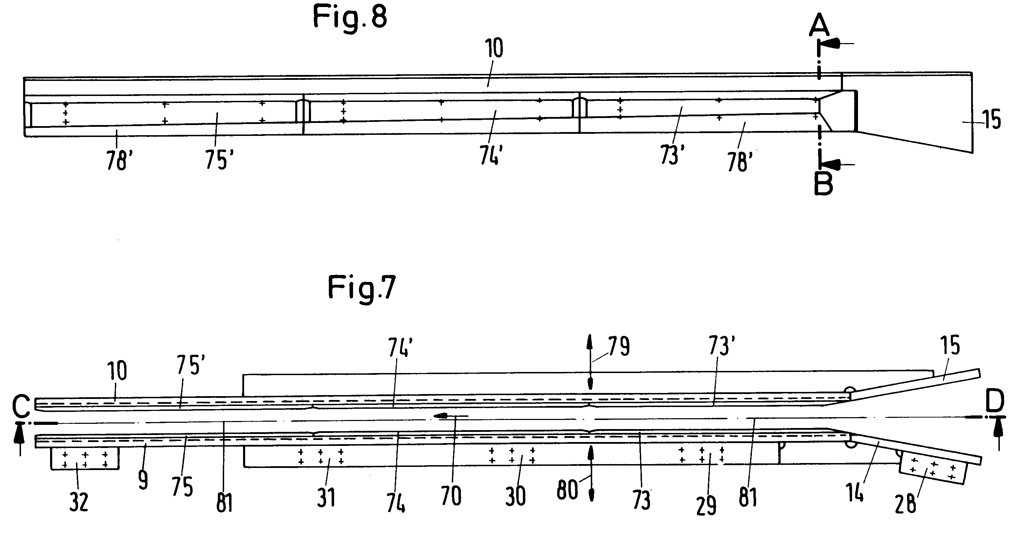

In Figur 1 ist in einer Längsansicht und in Figur 2 in einer Draufsicht die erfindungsgemäße Einrichtung 1 dargestellt. Aufgabengemäß dient diese Einrichtung 1 dazu, um langgestrecktes, stabförmiges Walzgut möglichst achsenmittig auf eine Prüf- oder Bearbeitungsstation hinzuführen. In diesem Ausführungsbeispiel ist auf der rechten Bildseite in Figur 1 das letzte Gerüst 2 eines Walzaggregates beispielsweise Streckreduzierwalzwerk skizzenhaft angedeutet. Aus diesem Gerüst 2 kommt mit hoher Geschwindigkeit das noch heiße Walzgut, hier beispielsweise ein Rohr 3 herausgeschossen und soll nun erfindungsgemäß gezielt auf ein Prüfaggregat beispielsweise Wirbelstromsonde 4 geführt werden. Transportiert wird das Walzgut 3 zwischen Walzgerüst 2 und Prüfvorrichtung 4 mittels vier angetriebener Rollen 5 bis 8. Die Führung des Walzgutes 3 übernimmt erfindungsgemäß ein Leitplankensystem (Einzelheiten siehe Fig. 7 bis 9) bestehend aus zwei zueinander verschiebbaren Leitplanken 9,10, die mittels eines Spindelantriebes 11 (Einzelheiten siehe Fig. 3) bewegt werden. Damit die Leitplanken 9,10 parallel geführt werden, sind rechts und links neben dem Spindelantrieb 11 Führungen 12,12', 13,13'angeordnet (Einzelheiten siehe Fig. 5). An der Einlaufseite sind die Leitplanken 9,10 trichterförmig abgewinkelt 14,15. Die untere Abstützung in diesem Bereich übernimmt ein Leitblech 16, das den gesamten Trichterbereich abdeckt und bis zur ersten Transportrolle 5 sich erstreckt. Am anderen Ende vor dem Einlauf in die Prüfvorrichtung 4 ist ebenfalls ein Leitblech 17 angeordnet. Damit dieses in den Trichter 18 der Prüfvorrichtung 4 sich erstrecken kann, ist der untere Teil des Trichters 18 weggeschnitten. Die Erstreckung des Leitbleches 17 reicht von der letzten Transportrolle 8 bis in den Trichterbereich 18 der Prüfvorrichtung 4. Damit in Abhängigkeit von der Abmessung des Walzgutes 3,3'die Mittelachse des Walzgutes 3,3'mit der Achse des Gerüstes 2 und der Prüfvorrichtung 4 fluchtet, ist das Leitplankensystem auf einem mit einem Gurt 19 versteiften Tragrahmen 20 montiert. Über vier Säulen 21 - 24 wird der Tragrahmen 20 geführt. Die Höhe kann über mit einer Gelenkwelle 25 antreibbaren Spindelhubelementen 26,27 eingestellt werden. Damit das Walzgut 3 nach oben hin nicht herausspringen kann, sind an verschiedenen Stellen über die Länge verteilt Befestigungen 28 - 31 für ein Abdeckblech 36 vorgesehen (Einzelheiten siehe Figur 3 und 5). Ein separates Abdeckblech 37 ist vor der Prüfvorrichtung 4 vorgesehen. Dies hat den Vorteil, daß im Falle einer Störung im Einlaufbereich der Prüfvorrichtung 4 das separat vorgesehene Abdeckblech 37 schneller abgeschraubt werden kann. Die Befestigung der Einrichtung 1 und der Prüfvorrichtung 4 auf dem Hallenboden 33 erfolgt über zwei Ankerplatten 34,35.

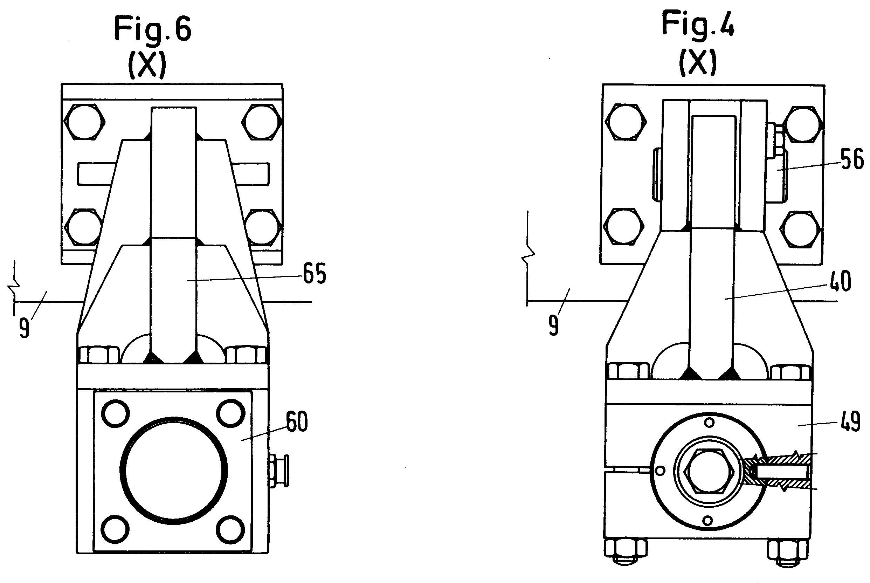

Figur 3 zeigt in einem vergrößerten Maßstab einen Schnitt C-D in Fig. 1 und Figur 4 eine Ansicht X in Fig. 3. In dieser Darstellung ist erkennbar, daß die Leitplanken 9,10 sich jeweils über eine gekröpfte Wange 40,41 auf einer Welle 42 abstützen. Diese Welle 42 ist mittels Wälzlager 43,44 in parallellaufenden Stegen 45,46 gelagert. Die Welle 42 weist kragenartig zwei Gewindeabschnitte 47,48 auf, und zwar je mit einem Rechts- bzw. Linksgewinde versehen. Die Wangen 40,41 sind mit einer Führungsbüchse 49,50 verbunden, in der eine Gewindebüchse 51 angeordnet ist, die mit einem komplementär ausgebildeten Gewinde versehen ist. Das rechte freie Ende 52 der Welle 42 ist als Zapfen ausgebildet, auf dem eine flanschartige Haltebüchse 53 befestigt ist. Diese Büchse 53 ist mit der Antriebswelle 55 eines hier nicht dargestellten elektrischen Antriebes über ein Kardangelenk 54 verbunden. Wird die Antriebswelle 55 mittels eines Stellmotors gedreht, dann drehen sich auch die Gewindeabschnitte 47,48 der Welle 42 und durch die Rechts-Linkskombination der Gewinde bewegen sich die Führungsbüchsen 49,50 und damit über die Wangen 40,41 auch die Leitplanken 9,10. Damit das Walzgut 3 nicht geklemmt wird, wird die lichte Weite zwischen den beiden Leitplanken 9,10 so eingestellt, daß zwischen der Mantelfläche des Walzgutes 3 und der Innenfläche der Leitplanken 9,10 ein ausreichender Spalt verbleibt. Die Absicherung nach oben hin übernimmt das schon erwähnte Abdeckblech 36 bzw. das separate Abdeckblech 37, das über Schrauben mit der einen Leitplanke 9 verbunden ist. Für den Abzug der sich erwärmenden Luft in dem Transportkanal sind in dem Abdeckblech 36 Öffnungen 38 vorgesehen. Außerdem kann darüber der Abstand der Leitplanken 9,10 kontrolliert werden. Damit bei einer möglichen Schiefstellung der Leitplanken 9,10 die Gewindeabschnitte 47,48 nicht zusätzlich belastet werden, sind die Wangen 40,41 über ein gabelartiges Gelenk 56,57 mit der jeweiligen Leitplanke 9,10 verbunden.

In Figur 5 ist in einem vergrößerten Maßstab ein Schnitt E-F in Figur 1 und in Figur 6 eine Ansicht X in Figur 5 dargestellt. Zur Führung der Leitplanken 9,10 sind rechts und links neben dem Spindelantrieb 11 zwei Führungen 12,12', 13,13' vorgesehen. Diese weisen je eine Führungsbüchse 60,61 auf, die entlang einer Achse 62 verschiebbar sind. Die Achse 62 ist in den bereits erwähnten Stegen 45,46 mittels Spannbuchsen 63,64 angeordnet. An den Führungsbuchsen 60,61 sind gekröpfte Wangen 65,66 befestigt, die im Unterschied zum Spindelantrieb 11 starr mit den Leitplanken 9,10 verbunden sind. Diese Darstellung zeigt auch, daß beim Zusammenschieben der Leitplanken 9,10 für die kleinste Abmessung des Walzgutes 3' das Abdeckblech 36 ebenfalls bewegt wird und damit der Transportkanal vollkommen abgeschlossen ist. Auf die Einzelheiten der Ausbildung der Leitplanken 9,10 wird in den Figuren 7 bis 9 näher eingegangen.

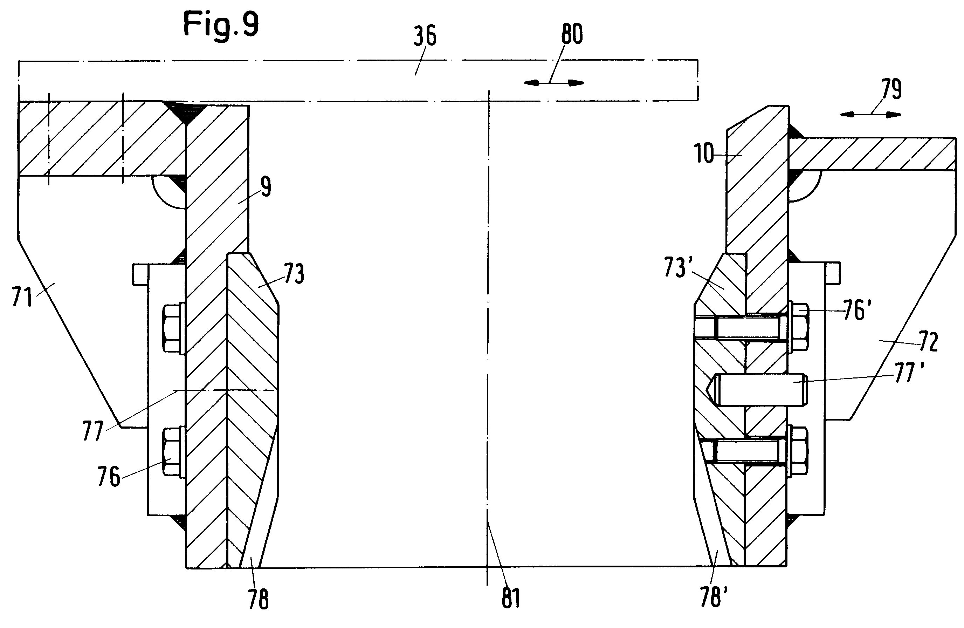

Figur 7 zeigt in einer Draufsicht und in Figur 8 in einem Schnitt C-D in Figur 7 das eigentliche Leitplankensystem. Zur weiteren Erläuterung ist in Figur 9 in einem stark vergrößerten Maßstab ein Schnitt A-B in Figur 8 wiedergegeben. Das Leitplankensystem besteht aus einer in Transportrichtung 70 gesehen links liegenden Leitplanke 9 und einer rechts liegenden Leitplanke 10. Die Verbindung der Leitplanken 9,10 mit den gekröpften Wangen 40,41, 65,66 ist in den Figuren 3 und 5 schon erläutert worden. Zur Versteifung der Leitplanken 9,10 sind Stege 71,72 im Eckbereich der Leitplanken 9,10 angeschweißt. Da die Leitplanken 9,10 bei direkter Berührung mit dem heißen Walzgut 3,3'schnell verschleißen würden, sind auswechselbar Führungsleisten 73,73', 74,74', 75,75'an den Leitplanken 9,10 befestigt. Die Befestigung erfolgt mittels Schrauben 76,76'und die Justierung über Stifte 77. Wie in Figur 8 und Figur 9 zu erkennen ist, ist der den Transportrollen 5 bis 8 zugewandte Bereich der Führungsleisten 73 bis 75'besonders ausgebildet. Dieser Bereich weist eine in Transportrichtung 70 gesehen abnehmende schrägverlaufende Ausnehmung 78,78'auf. Speziell in Figur 8 ist gut zu erkennen, wie die Höhe der Ausnehmung 78'in Transportrichtung 70 gesehen stetig abnimmt. Dadurch ergibt sich ein trichterförmiger Kanal, der sicherstellt, daß auch kleines Walzgut 3'nicht nach oben aus dem Kanal herausspringen kann. Für die großen Abmessungen 3 übernimmt diese Aufgabe das Abdeckblech 36. Die Verschiebung der beiden Leitplanken 9,10 ist durch die Pfeile 79,80 gekennzeichnet, wobei die Bewegungen symmetrisch in bezug auf die Mittelachse 81 erfolgt.

## Patentansprüche

1. Einrichtung zur Führung von zu transportierendem langgestreckten Gut (3, 3'), auf einem Rollgang mit mindestens zwei im Abstand angeordneten quer zur Transportrichtung liegenden Laufrollen (5 - 8) und mit im Randbereich der Laufrollen (5 - 8) angeordneten längs zur Transportrichtung (70) sich erstreckenden, einander gegenüberliegenden Leitplanken (9, 10), die symmetrisch mit einem Verschiebemittel (11) und über Führungen (12, 12', 13, 13') zur Mittelachse (81) der Transportbahn hin verschiebbar sind, wobei die Leitplanken (9, 10), das Verschiebemittel (11), die Führungen (12, 12', 13, 13') sowie die Transportrollen (5 - 8) auf einem Tragrahmen (20) befestigt sind, der über Führungssäulen (21 - 24) und Spindelhubelemente (26, 27) heb- und senkbar ist,
**dadurch gekennzeichnet**,
daß zum Transport von stabförmigem Gut (3), insbesondere Hohlprofil beliebigen Querschnittes, ein in Transportrichtung (70) gesehen bestimmter sich über mehr als zwei benachbart liegende Laufrollen (5 - 8) erstreckender Abschnitt der beiden Leitplanken (9, 10), deren Anfangsbereich trichterartig (14, 15) ausgebildet ist und die mit Stegen (71, 72) versteift über gekröpfte Wangen (40, 41, 65, 66) zum einen mit dem Verschiebemittel (11) und zum anderen mit den Führungen (12, 12', 13, 13') verbunden sind, auf der Innenseite auswechselbar mit Führungsleisten (73, 73', 74, 74', 75, 75') versehen ist, wobei die Führungsleisten (73, 73', 74, 74', 75, 75') im Querschnift gesehen in dem den Laufrollen (5 - 8) zugewandten Bereich eine Schräge aufweisen, die ergänzend zueinander ein Dach bilden, und wobei zur Bildung eines trichterförmigen Kanals in diesem Bereich ein Teil der Querschnittsfläche der Führungsleisten (73, 73', 74, 74', 75, 75') in Transportrichtung (70) gesehen abnehmend ausgenommen (78, 78') ist.

2. Einrichtung nach Anspruch 1,
dadurch gekennzeichnet,
daß das Verschiebemittel (11) eine zweifach in parallel unterhalb der Transportbahn verlaufenden Stegblechen (45,46) gelagerte (43,44) Welle (42) aufweist, die nach beiden Seiten hin mit je einem einen verschiedenen Drehsinn aufweisenden Gewindeabschnitt (47,48) versehen ist, der mit einer ein komplementär ausgebildetes Gewinde aufweisenden Gewindebuchse (51) zusammenwirkt, die ihrerseits in mit der jeweiligen Wange (49,50) verbundenen Führungsbuchse (49,50) angeordnet ist.

3. Einrichtung nach Anspruch 2,
dadurch gekennzeichnet,
daß sich an einem Endbereich der Welle (42) an den Gewindeabschnitt (48) ein als Zapfen ausgebildeter Wellenabschnitt (52) anschließt, der über ein am Wellenabschnitt (52) befestigtes Kardangelenk (54) mit einem Stellantrieb über eine Antriebswelle (55) verbindbar ist.

4. Einrichtung nach Anspruch 2,
dadurch gekennzeichnet,
daß im Verbindungsbereich zwischen Wangen (40,41) und Leitplanken (9,10) ein gabelartiges Gelenk (56,57) vorgesehen ist.

5. Einrichtung nach Anspruch 1,
dadurch gekennzeichnet,
daß die Führungen (12,12',13,13') Führungsbuchsen (60,61) aufweisen, die auf einer zweifach mittels Spannbuchsen (63,64) in Stegblechen (45,46) befestigten Achse (62) verschiebbar angeordnet und über gekröpfte Wangen (65,66) mit den Leitplanken (9,10) verbunden sind.

6. Einrichtung nach den Ansprüchen 1 bis 5,
dadurch gekennzeichnet,
daß an einer Leitplanke (9) an der oberen Schmalseite ein den Transportkanal abdeckendes Blech (36,37) befestigt ist.

7. Einrichtung nach Anspruch 6,
dadurch gekennzeichnet,
daß das Abdeckblech (36,37) durch die Dicke des Bleches sich erstreckende Öffnungen (38) aufweist.

## Claims

1. A means for guiding elongate product (3, 3') which is to be transported, on a roller table having at least two spaced-apart running rollers (5-8) lying transversely to the direction of transportation, and having opposing guide boards (9, 10) arranged in the edge region of the running rollers (5-8) and extending longitudinally to the direction of transportation (70), which boards are displaceable symmetrically towards the centre line (81) of the conveyor track with a displacement means (11) and by means of guides (12, 12', 13, 13'), the guide boards (9, 10), the displacement means (11), the guides (12, 12', 13, 13') and the transport rollers (5-8) being fastened to a supporting frame (20) which can be raised and lowered by means of guide columns (21-24) and spindle-type elevating elements (26, 27),
characterised in that
for transporting bar-shaped product (3), in particular hollow profiles of any cross-section, a certain section, viewed in the direction of transportation (70), of the two guide boards (9, 10) which extends over more than two adjacent running rollers (5-8), the initial region of which guide boards is funnel-shaped (14, 15) and which, reinforced with brackets (71, 72), are connected via bent cheeks (40, 41, 65, 66) firstly to the displacement means (11) and secondly to the guides (12, 12', 13, 13'), is provided on the inside in exchangeable manner with guide bars (73, 73', 74, 74', 75, 75'), the guide bars (73, 73', 74, 74', 75, 75'), viewed in cross-section, having an incline in the region facing the running rollers (5-8), which inclines supplement each other to form a roof, and with a portion of the cross-sectional surface of the guide bars (73, 73', 74, 74', 75, 75'), viewed in the direction of transportation (70), being decreasingly cutout (78, 78') to form a funnel-shaped channel in this region.

2. A means according to Claim 1, characterised in that the displacement means (11) has a shaft (42) which is doubly mounted (43, 44) in web plates (45, 46) which extend in parallel beneath the conveyor track, which shaft is provided on either side with a threaded section (47, 48) having different directions of thread, which section cooperates with a threaded bush (51) having a complementarily designed thread, which bush itself is arranged in a guide bush (49, 50) connected to the respective cheek (49, 50).

3. A means according to Claim 2, characterised in that a shaft section (52) in the form of a spigot adjoins the threaded section (48) at one end region of the shaft (42), which shaft section can be connected, via a cardan joint (54) fastened to the shaft section (52), to an actuating drive by means of a drive shaft (55).

4. A means according to Claim 2, characterised in that a fork-like articulation (56, 57) is provided in the region of connection between the cheeks (40, 41) and guide boards (9, 10).

5. A means according to Claim 1, characterised in that the guides (12, 12', 13, 13') have guide bushes (60, 61) which are arranged displaceably on an axle (62) which is doubly fastened by means of clamping bushes (63, 64) in web plates (45, 46) and are connected to the guide boards (9, 10) via bent cheeks (65, 66).

6. A means according to Claims 1 to 5, characterised in that a metal sheet (36, 37) covering the transport channel is fastened to one guide board (9) on the upper narrow side.

7. A means according to Claim 6, characterised in that the cover sheet (36, 37) has openings (38) which extend through the thickness of the sheet.

## Revendications

1. Dispositif destiné au guidage de produits allongés (3, 3') à transporter sur un train de rouleaux, comportant au moins deux rouleaux de roulement (5 à 8) disposés à une certaine distance transversalement à la direction du transport, et des rails de guidage (9, 10) disposés l'un en face de l'autre dans la zone marginale des rouleaux de roulement (5 à 8), qui s'étendent le long de la direction de transport (70), qui peuvent être déplacés symétriquement à l'axe médian (81) de la voie de transport par un moyen de déplacement (11) et par l'intermédiaire de guides (12, 12', 13, 13'), les rails de guidage (9, 10), le moyen de déplacement (11), les guides (12, 12', 13, 13'), ainsi que les rouleaux de transport (5 à 8), étant fixés sur un cadre de support (20) qui peut être soulevé et abaissé par l'intermédiaire de colonnes de guidage (21 à 24) et d'éléments de levage (26, 27) à axe,
caractérisé en ce que,
pour le transport de produits (3) en forme de barres, notamment de profilés creux de section transversale quelconque, un tronçon déterminé, vu dans la direction de transport (70), s'étendant sur plus de deux rouleaux de roulement (5 à 8) voisins, des deux rails de guidage (9, 10), dont la zone de départ est réalisée en forme de trémie (14, 15) et qui sont reliés, en étant renforcés par des entretoises (71, 72), par l'intermédiaire de coulisses coudées (40, 41, 65, 66), d'une part, au moyen de déplacement (11) et, d'autre part, aux guides (12, 12', 13, 13'), est muni, sur la face intérieure, de barres de guidage interchangeables (73, 73', 74, 74', 75, 75'), les barres de guidage (73, 73', 74, 74', 75, 75') comportant, vu en coupe transversale, un chanfrein dans la zone orientée en direction des rouleaux de roulement (5 à 8), en formant conjointement un toit, et une partie de la surface en section transversale des barres de guidage (73, 73', 74, 74', 75, 75') étant évidée (78, 78') dans cette zone de façon décroissante, vue dans la direction de transport (70), afin de former un canal en forme de trémie.

2. Dispositif selon la revendication 1,
caractérisé en ce que
le moyen de déplacement (11) comporte un arbre (42) logé en deux points dans des tôles d'entretoise (45, 46) s'étendant parallèlement sous la voie de transport, lequel est muni de chaque côté d'un tronçon fileté (47, 48) à filetage inversé et coopère avec une douille taraudée (51) comportant un filetage complémentaire, cette dernière étant de son côté disposée dans une douille de guidage (49, 50) reliée à la coulisse (49, 50) respective.

3. Dispositif selon la revendication 2,
caractérisé en ce que
un tronçon d'arbre (52) réalisé en tant que tourillon se raccorde, à une zone d'extrémité de l'arbre (42), au tronçon fileté (48), lequel peut être relié à un servomoteur par l'intermédiaire d'un arbre d'entraînement (55) par une articulation à la Cardan (54) fixée sur le tronçon d'arbre (52).

4. Dispositif selon la revendication 2,
caractérisé en ce que
une articulation (56, 57) de type fourche est prévue dans la zone de liaison entre les coulisses (40, 41) et les rails de guidage (9, 10).

5. Dispositif selon la revendication 1,
caractérisé en ce que
les guides (12, 12', 13, 13') comportent des douilles de guidage (60, 61) qui sont mobiles sur un axe (62) fixé en deux points dans des tôles d'entretoise (45, 46) au moyen de manchons de serrage (63, 64), et qui sont reliées aux rails de guidage (9, 10) par l'intermédiaire de coulisses coudées (65, 66).

6. Dispositif selon l'une quelconque des revendications 1 à 5,
caractérisé en ce que
une tôle (36, 37) recouvrant le canal de transport est fixée, sur le côté supérieur étroit, à un rail de guidage (9).

7. Dispositif selon la revendication 6,
caractérisé en ce que
la tôle de recouvrement (36, 37) comporte des orifices (38) qui s'étendent à travers l'épaisseur de la tôle.
